# EUROPÄISCHE PATENTANMELDUNG

(11) **EP 4 144 806 A1**
(43) Veröffentlichungstag der Anmeldung: **08.03.2023**
(21) Anmeldenummer: 21195074.6
(22) Anmeldetag: 06.09.2021
(51) Int. Cl.: C09D 5/14, C09D 183/04

(54) **ZUSAMMENSETZUNG MIT ANTIMIKROBIELLEN EIGENSCHAFTEN, INSBESONDERE BIOZIDEN EIGENSCHAFTEN, FÜR OBERFLÄCHENBESCHICHTUNGEN VON HOLZWERKSTOFFPLATTEN**

(71) Anmelder: SWISS KRONO Tec AG, 6004 Luzern (CH)
(72) Erfinder: GIER, Dr. Andreas, 66399 Mandelbachtal (DE); HASCH, Prof. Dr. Joachim, 10317 Berlin (DE); KALWA, Dr. Norbert, 32805 Horn-Bad Meinberg (DE)
(74) Vertreter: Maikowski & Ninnemann Patentanwälte Partnerschaft mbB

(57) **Zusammenfassung**

Die vorliegende Erfindung betrifft eine Zusammensetzung mit antimikrobiellen Eigenschaften, insbesondere antiviralen Eigenschaften, als Additiv für Oberflächenbeschichtungen von Trägermaterialien, wobei die Zusammensetzung umfasst: mindestens ein Polyol oder einen Glycolether; mindestens eine Verbindung der allgemeinen Formel (I) R¹ₐSiX₍₄₋ₐ₎ (I), wobei X Alkoxy ist, und R¹ ein organischer Rest ist ausgewählt aus der Gruppe umfassend Alkyl, Cycloalkyl, oder Phenyl und a = 1, 2, 3, insbesondere 1 oder 2 ist, mindestens eine Verbindung der allgemeinen Formel (II) SiX₄ (II), wobei X Alkoxy ist, und mindestens einem antimikrobiellen Wirkstoff, insbesondere mindestens ein Biozid.

## Beschreibung

Die vorliegende Erfindung betrifft eine Zusammensetzung mit antimikrobiellen Eigenschaften, insbesondere bioziden Eigenschaften, als Additiv für Oberflächenbeschichtungen auf Werkstoffplatten, ein Lack und ein Schmelzklebstoff enthaltend diese Zusammensetzung, die Verwendung dieser Zusammensetzung und damit beschichtete Holzwerkstoffplatten

### Beschreibung

In nahezu allen Bereichen des täglichen Lebens trifft der Nutzer auf Oberflächen, die zur Verbesserung der Nutzungseigenschaften, Verbesserung der haptischen Eigenschaften, zur optischen Aufwertung usw. mit Beschichtungen versehen sind. So werden in verschiedenen Bereichen bei Möbeln, Bodenbelägen und Innenausbau Holzwerkstoffplatten und Elemente mit einer lackierten Oberfläche eingesetzt.

Diese Oberflächenbeschichtungen sind aber nicht in allen Fällen bezüglich ihrer hygienischen Eigenschaften als optimal zu betrachten. Die hat häufig mit der Materialauswahl selbst, aber auch mit den gestalterischen Vorgaben der Designer usw. zu tun. All dies steht aber im Gegensatz zur Tatsache, dass in der öffentlichen Wahrnehmung der Themenkomplex Hygiene/Desinfektion eine immer größere Rolle spielt. Weiterhin ist zu berücksichtigen, dass die Spanne der Oberflächen bezüglich ihrer Desinfizierbarkeit erheblich ist.

Während eine Melaminoberfläche leicht, schnell und häufig desinfizierbar ist ohne das Oberflächenveränderungen auftreten, trifft dies für Hochglanz-Lackfronten häufig nicht zu. Hier können beim Einsatz von Desinfektionsmitteln Oberflächenveränderungen, wie Aufglänzungen oder Streifenbildung, auftreten. Diese können durch die chemisch aggressiven Desinfektionsmitteln im generellen verursacht werden oder durch eine Applikation, die nicht den Vorgaben des Herstellers entspricht.

Gerade bei empfindlicheren Oberflächen sind Desinfektionsmittel-Applikationen von nicht sachkundigem Personal als kritisch zu betrachten, da diese über die genauen Randbedingungen der Applikation (Auftragsmengen, Auftragsbedingungen usw.) nicht informiert sind. Zudem sind die Zubereitungen, die eingesetzt werden müssen, gesundheitlich nicht unbedenklich und sollten deshalb nur von geschultem Personal angewendet werden. Außerdem führt, die sich in regelmäßigen Abständen wiederholende Applikation, zu Nutzungsausfällen. Diese wiederholten Applikationen führen selbstverständlich auch zu höheren Kosten.

Ansätze für Trägermaterialien, die nicht auf Holzwerkstoffen basieren, sind bereits bekannt.

Ein Beispiel für eine langzeitstabile, mikrobizide Beschichtung für Kunststoffe oder Metalle wird in der DE 10 2008 051 543 A1 beschrieben. Die hier angeführte Beschichtung umfasst eine organische mikrobiozide Verbindung und ein Kondensat aus einem Organosilan mit hydrolytisch nicht-abspaltbaren Gruppen und einem hydrolysierbaren Silan. Als bevorzugte Beispiele werden Glycidyloxypropyltrimethoxysilan und Tetraethoxysilan benannt. Es können ebenfalls hydrolysierbare Metall- oder Borverbindungen, wie Al(OCH₃)₃, TI(OC₃H₇)₄ oder B(OC₂H₅)₃ enthalten sein. Nachteilig ist, dass diese Beschichtungszusammensetzung nicht kompatibel im Sinne der Prozesssicherheit ist. Es handelt sich um Ethanol / Methanol basierte Beschichtungen, die zwar wassmischbar sein können, jedoch ergeben sich hier Probleme hinsichtlich Ex-Schutz / Toxizität (Methanol) und Emissionsschutz

In der DE 10 2006 001 641 A1 wird ein Substrat mit bioziden und antimikrobiellen Eigenschaften beschrieben, wobei hierbei auf ein Substrat (wie ein Gewirke, Gewebe, Vlies oder Papier) zunächst eine anorganische Verbindung aus einem Metall oder Halbmetall aufgebracht wird. Nach dessen Trocknung wird eine erste Beschichtung aus einem Organosilan (z.B. Glycidyloxypropyltrimethoxysilan) mit Oxidpartikeln gefolgt von einer weiteren Beschichtung aus einem Organosilan mit einer bioziden Substanz, die Zink oder Silber enthält.

Diese bisher bekannten Ansätze weisen jedoch verschiedene Nachteile auf. So sind diese Systeme nur bedingt in Lacken oder Schmelzklebstoffen einsetzbar oder enthalten silberhaltige Salze, die sich als gesundheitsgefährdend und für die Umwelt als problematisch erwiesen haben.

Der Erfindung liegt daher die technische Aufgabe zu Grunde eine Oberflächenlackierung und/oder einen für die Oberflächenbeschichtung geeigneten Schmelzklebstoff mit einem antiviralen Wirkstoff für Holzwerkstoffen bereitzustellen, die diese Nachteile nicht aufweist. Die Wirkstoffe sollen gesundheitlich unbedenklich sein und sich ohne großen Aufwand in den Lack einarbeiten lassen. Die Formulierungen sollen weiterhin auf den üblicherweise eingesetzten Auftragsaggregaten verarbeitet werden. Die Qualität der Oberfläche bezüglich der mechanischen und chemischen Beständigkeit sollen nicht beeinflusst werden.

Diese Aufgabe wird erfindungsgemäß durch eine Zusammensetzung mit den Merkmalen des Anspruchs 1 gelöst.

Entsprechend wird eine Zusammensetzung mit antimikrobiellen Eigenschaften, insbesondere antiviralen Eigenschaften, als Additiv für Oberflächenbeschichtungen von Trägermaterialien, insbesondere Holzwerkstoffplatten, bereitgestellt, wobei die Zusammensetzung umfasst:
- mindestens ein Polyol oder einen Glycolether;
- mindestens eine Verbindung der allgemeinen Formel (I)

   **R¹ₐSiX₍₄₋ₐ₎** **(I),**

   wobei
   - X Alkoxy ist, und
   - R¹ ein organischer Rest ist ausgewählt aus der Gruppe umfassend Alkyl, Cycloalkyl, oder Phenyl und
   - a = 1, 2, 3, insbesondere 1 oder 2 ist,
- mindestens eine Verbindung der allgemeinen Formel (II)

   **SiX₄** **(II),**

   wobei X Alkoxy ist, und
   - mindestens einem antimikrobiellen Wirkstoff, insbesondere mindestens ein Biozid.

Mit der vorliegenden Zusammensetzung ist das Einbringen bzw. Einbetten von bioziden Wirkstoffen in eine Lackmatrix, wie z.B. eine abschließende Oberflächenlackierung, oder einen Schmelzklebstoff wie z.B. einen PUR-Schmelzklebstoff, möglich, die auf Oberflächen von Trägermaterialien wie Holzwerkstoffplatten aufgetragen werden. Für diesen Zweck umfasst die vorliegende Zusammensetzung mindestens eine Silanverbindung der allgemeinen Formel (I) und eine weitere Silanverbindung der allgemeinen Formel (II). Die Silanverbindung der Formel (I) bindet über den organischen Rest an den antimikrobiellen Wirkstoff. Die Silanverbindung der Formel (II) dient dem Aufbau eines SiO₂₋ Netzwerkes über Kondensation der OH-Gruppen, Anbindung an Polyol / Glycolether und den antimikrobiellen Wirkstoff. Der biozide Wirkstoff wird an die Silane angekoppelt. Der Komplex aus Wirkstoff und Silan kann dann fest in das Beschichtungsmittel eingebunden werden. Auch sind Polyole Bestandteil des PUR Schmelzklebers und können somit chemisch eingebunden werden. Die Alkylgruppen, wie Methyl, der Silanverbindung der Formel (I) bewirken ein "Auflockern" des dreidimensionalen SiO₂-Netzwerkes, welches sich durch Kondensation bildet. Es werden flexiblere Netzstrukturen aufgebaut, die nicht zu spröde sind.

Es sei darauf hingewiesen, dass die vorliegende Zusammensetzung, nicht auf lederhaltige, metall- oder halbmetallhaltige Beschichtungen, Oberflächen oder Materialien aufgetragen wird. Insbesondere wird die vorliegende Zusammensetzung, oder ein die Zusammensetzung enthaltendes Lacksystem bevorzugt auf zellulosehaltige Oberflächen und Materialien, insbesondere Holzwerkstoffplatten, jedoch keine Textilien, aufgetragen. Es ist auch möglich die Zusammensetzung auf Glas oder Folien aufzubringen.

Die vorliegende Zusammensetzung kann Lackformulierungen, insbesondere in Oberflächenlackierungen oder Decklacke, oder Schmelzklebstoffen zugegeben werden, die zur Beschichtung von Holzwerkstoffplatten verwendet werden. Dabei wird die viral aktive Komponente je nach benötigter Menge dem Decklack oder dem Schmelzklebstoff zugemischt.

Die Verwendung der vorliegenden Zusammensetzung bietet verschiedene Vorteile. So ergibt sich durch die Einbettung des Wirkstoffes in die Lack- bzw. Schmelzklebstoffmatrix ein permanenter antimikrobieller Schutz; ein Auswaschen des Wirkstoffes ist erschwert bzw. nicht möglich. Zudem werden die Desinfektionskosten reduziert, da der Wirkstoff nur einmal in die Oberflächenschicht eingebracht wird; ein wiederholtes Auftragen eines Desinfektionsmittels kann vermieden werden.

In einer Ausführungsform kann die vorliegende Zusammensetzung mindestens eine weitere Verbindung der allgemeinen Formel (III)

**R²SiX₃** **(III),**

umfassen, wobei
- X Alkoxy ist, und
- R¹ ein organischer Rest ist ausgewählt aus der Gruppe umfassend C1-C10 Alkyl, die durch -O- oder-NH- unterbrochen sein können, und
- wobei R¹ mindestens eine funktionelle Gruppe Q₁ aufweist, die ausgewählt ist aus einer Gruppe enthaltend eine Methacryl-, Methacryloxy-, Vinyl-, und Epoxid-Gruppe.

Der hydrolysierbare Rest X ist vorteilhafterweise ausgewählt aus einer Gruppe enthaltend C₁₋₆-Alkoxy, insbesondere Methoxy, Ethoxy, n-Propoxy, i-Propoxy und Butoxy.

Der organische Rest R¹ der Verbindung der allgemeinen Formel (I) ist bevorzugt ausgewählt aus einer Gruppe umfassend C1-C10 Alkyl, bevorzugt C1-C8 Alkyl, insbesondere bevorzugt Methyl, Ethyl, Propyl, Pentyl, Hexyl, Heptyl, Octyl. Der Begriff "Cycloalkyl" umfasst die Gruppen Cyclopropyl, Cyclobutyl, Cyclopentyl, Cyclohexyl und Cycloheptyl.

Die Verbindung der allgemeinen Formel (I) kann insbesondere eine der folgenden Formeln umfassen: R¹SiX₃ oder R¹₂SiX₂ mit R¹ als C1-C10 Alkyl-Gruppe, bevorzugt Methyl, Ethyl, Propyl, Pentyl, Hexyl, Heptyl, Octyl, und mit X als Alkoxy, insbesondere Methoxy, Ethoxy, n-Propoxy oder i-Propoxy.

In einer Variante der vorliegenden Zusammensetzung können Verbindungen der allgemeinen Formel (I) gemäß R¹ₐSiX₍₄₋ₐ₎, insbesondere R¹SiX₃, ausgewählt sein aus Methyltriethoxysilan, Phenyltriethoxysilan, Dimethyldiethoxysilan, Octyltriethoxysilan.

In einer besonders bevorzugten Variante der vorliegenden Zusammensetzung umfasst die Verbindung der allgemeinen Formel (II) SiX₄ Methoxy, Ethoxy, n-Propoxy oder i-Propoxy und Butoxy, als X. Besonders bevorzugt sind die Verbindungen Tetramethoxysilan und Tetraethoxysilan als Verbindung der allgemeinen Formel (II).

Der organische R² der Verbindung der allgemeinen Formel (III) ist bevorzugt ausgewählt aus einer Gruppe umfassend Methyl, Ethyl, Propyl, Pentyl, Hexyl, Heptyl, Octyl, die durch -O- oder -NH- unterbrochen sein können.

In einer Ausführungsform der vorliegenden Zusammensetzung ist die mindestens eine funktionelle Gruppe Q¹ der Verbindung der allgemeinen Formel (III) ausgewählt aus einer Gruppe enthaltend Epoxid-, Methacryloxy, Amino, und Vinyl. Besonders bevorzugte funktionelle Gruppe Q¹ ist Glycidyloxy. Die funktionelle Gruppe Q¹ weist vorteilhafterweise einen Rest mit einer Doppelbindung oder einer Epoxid-Gruppe auf, der mittels UV-Strahlung aktivierbar und polymerisierbar ist.

In einer besonders bevorzugten Variante der vorliegenden Zusammensetzung umfasst die Verbindung der allgemeinen Formel (III) Methoxy, Ethoxy, n-Propoxy oder i-Propoxy und Butoxy, als X.

Besonders bevorzugt sind die Verbindungen Glycidyoxypropyltriethoxysilan und Glycidyoxypropyltrimethyoxysilan als Verbindung der allgemeinen Formel (III).

Als Glycolether werden Dipropylenglycolmonomethylether, Tripropylenglycolmonomethylether, 1-Methoxy-2-propanol, Tripropylenglykol-monobutylether, Propylenglykol-butylether, Ethylenglykol-monophenylether verwendet.

Als Polyol werden Polybutadiendiol, Polyethylenglycol, Polypropylenglycol, Propan-1,2,3-triol verwendet.

In einer bevorzugten Ausführungsform umfasst die vorliegende Zusammensetzung
- Mindestens einen Glycolether,
- Mindestens eine Verbindung der allgemeinen Formel (I) gemäß R¹SiX₃ oder R¹₂SiX₂ mit R¹ als C1-C10 Alkyl-Gruppe, bevorzugt Methyl, Ethyl, Propyl, Pentyl, Hexyl, Heptyl, Octyl, und mit X als Alkoxy, insbesondere Methoxy, Ethoxy, n-Propoxy oder i-Propoxy;
- Mindestens eine Verbindung der allgemeinen Formel (II) gemäß SiX₄ mit X als Methoxy, Ethoxy, n-Propoxy oder i-Propoxy und Butoxy; und
   - mindestens einem antimikrobiellen Wirkstoff, insbesondere mindestens ein Biozid.

In einer weiteren bevorzugten Ausführungsform umfasst die vorliegende Zusammensetzung
- Mindestens einen Glycolether,
- Mindestens eine Verbindung der allgemeinen Formel (I) gemäß R¹SiX₃ oder R¹₂SiX₂ mit R¹ als C1-C10 Alkyl-Gruppe, bevorzugt Methyl, Ethyl, Propyl, Pentyl, Hexyl, Heptyl, Octyl, und mit X als Alkoxy, insbesondere Methoxy, Ethoxy, n-Propoxy oder i-Propoxy;
- Mindestens eine Verbindung der allgemeinen Formel (II) gemäß SiX₄ mit X als Methoxy, Ethoxy, n-Propoxy oder i-Propoxy und Butoxy;
- Mindestens eine Verbindung der allgemeinen Formel (III) gemäß R²SiX₃ mit R² als Methyl, Ethyl, Propyl, Pentyl, Hexyl, Heptyl, Octyl, die durch -O- oder -NHunterbrochen sein können, und funktionalisiert mit einer Epoxid- oder Vinyl-Gruppe als Q1, und X als Methoxy, Ethoxy, n-Propoxy, i-Propoxy oder Butoxy; und
- mindestens einem antimikrobiellen Wirkstoff, insbesondere mindestens ein Biozid.

In einer noch weiteren Ausführungsform umfasst die vorliegende Zusammensetzung
- Mindestens ein Polyol,
- Mindestens eine Verbindung der allgemeinen Formel (I) gemäß R¹SiX₃ oder R¹₂SiX₂ mit R¹ als C1-C10 Alkyl-Gruppe, bevorzugt Methyl, Ethyl, Propyl, Pentyl, Hexyl, Heptyl, Octyl, und mit X als Alkoxy, insbesondere Methoxy, Ethoxy, n-Propoxy oder i-Propoxy;
- Mindestens eine Verbindung der allgemeinen Formel (II) gemäß SiX₄ mit X als Methoxy, Ethoxy, n-Propoxy oder i-Propoxy und Butoxy; und
   - mindestens einem antimikrobiellen Wirkstoff, insbesondere mindestens ein Biozid.

In besonders bevorzugten Ausführungsformen umfasst die vorliegende Zusammensetzung;
- Mindestens einen Glycolether,
- Mindestens eine Verbindung der allgemeinen Formel (I) gemäß R¹SiX₃ oder R¹₂SiX₂ mit R¹ als Methyl, Ethyl, Propyl, und mit X als Methoxy, Ethoxy,;
- Mindestens eine Verbindung der allgemeinen Formel (II) gemäß SiX₄ mit X als Methoxy, Ethoxy, und
   - mindestens einem antimikrobiellen Wirkstoff, insbesondere mindestens ein Biozid.
Oder
- Mindestens einen Glycolether,
- Mindestens eine Verbindung der allgemeinen Formel (I) gemäß R¹SiX₃ oder R¹₂SiX₂ mit R¹ als Methyl, Ethyl, Propyl, und mit X als Methoxy, Ethoxy;
- Mindestens eine Verbindung der allgemeinen Formel (II) gemäß SiX₄ mit X als Methoxy, Ethoxy;
- Mindestens eine Verbindung der allgemeinen Formel (III) gemäß R²SiX₃ mit R² als Ethyl, Propyl, Pentyl, die durch -O- oder -NH- unterbrochen sein können, und funktionalisiert mit einer Epoxid- oder Vinyl-Gruppe als Q1, und X als Methoxy, Ethoxy; und
- mindestens einem antimikrobiellen Wirkstoff, insbesondere mindestens ein Biozid.
Oder
- Mindestens ein Polyol,
- Mindestens eine Verbindung der allgemeinen Formel (I) gemäß R¹SiX₃ oder R¹₂SiX₂ mit R¹ als Methyl, Ethyl, Propyl, und mit X als Methoxy, Ethoxy;
- Mindestens eine Verbindung der allgemeinen Formel (II) gemäß SiX₄ mit X als Methoxy, Ethoxy; und
   - mindestens einem antimikrobiellen Wirkstoff, insbesondere mindestens ein Biozid.

Die molaren Verhältnisse der Verbindung der Formel (I) und der Formel (II) können in der Zusammensetzung in einem Bereich zwischen 0,5 : 10 und 10: 0,5 bevorzugt 4 : 1 liegen.

Die molaren Verhältnisse der Verbindung der Formel (I), der Formel (II) und der Formel (III) können in der Zusammensetzung in einem Bereich zwischen 0,5 : 10 : 1 und 10 : 0,5: 10 bevorzugt 4 : 1 : 3 liegen.

Wie oben bereits angedeutet, handelt es sich bei dem verwendeten antimikrobiellen Wirkstoff um ein Biozid. Bevorzugt wird kein metallhaltiges Biozid, insbesondere kein silberhaltiges oder zinkhaltiges Biozid verwendet. Voraussetzung für die Auswahl eines geeigneten Biozids ist, das dieses der EU-Verordnung Nr. 528/2012 über das Inverkehrbringen von Biozid-Produkten entspricht. Biozide können entweder nach Produktarten wie Desinfektionsmittel und Schutzmittel oder nach deren Zielorganismen (Viruzide, Bakterizide, Fungizide etc.) eingeteilt werden. Vorliegend kann das mindestens eine Biozid ausgewählt sein aus einer Gruppe umfassend Benzalkoniumchlorid, Oktylammoniumchlorid, Chitosan, Phenylphenol, 4-Chloro-3-methylphenol, Milchsäure, Nonansäure, Natriumbenzoat, 1-[[2-(2,4-dichlorophenyl)-4-propyl-1,3-dioxolan-2-yl]methyl]-1H-1,2,4-triazole, 2-octyl-2H-isothiazol-3-one, Thiazol-4-yl-1H-benzoimidazole, 3-lodo-2-propynylbutylcarbamat, Biphenyl-2-ol, Bronopol / Kalzium-Magnesiumoxid, Kupfer (II) oxid, 2-Pyridinthiol-1-oxid, Besonders bevorzugte Biozide sind Benzalkoniumchlorid, Chitosan, Phenylphenol, 4-Chloro-3-methylphenol, Biphenly-2-ol, ganz besonders bevorzugt 4-Chloro-3-methylphenol, Biphenly-2-ol. Die angeführten Wirkstoffe stammen aus Produktfamilien 2 und 9, die für antiviral wirkende Fußböden bereits genehmigt sind bzw. sich in Genehmigung befinden.

Das mindestens eine Biozid kann in der vorliegenden Zusammensetzung in einer Menge (bezogen auf die Menge der Zusammensetzung aus zwei Silanen und Biozid) zwischen 10 und 30 Gew%, bevorzugt zwischen 15 und 25 Gew%, insbesondere bevorzugt zwischen 18 und 23 Gew%, z.B. 20 Gew% oder 22 Gew%, enthalten sein.

In einer besonders bevorzugten Ausführungsform ist vorgesehen, dass die vorliegende Zusammensetzung mehr als ein Biozid, insbesondere mindestens zwei Biozide enthält.

Es hat sich nämlich herausgestellt, dass im Falle von bestimmten Bioziden, wie z.B. Phenylphenol, es bei hohen Mengen des Biozids von z.B. über 20 Gew% es zu einer Entmischung der Zusammensetzung und somit zu optischen Inhomogenitäten auf den Oberflächen kommen kann.

Um in solchen Fällen trotzdem eine hohe Wirksamkeit des antiviralen Additivs zu gewährleisten, hat es sich als vorteilhaft erwiesen, ein weiteres Biozid, wie z.B. 4-Chor-3-methylphenol, der vorliegenden Zusammensetzung, insbesondere im Unterschuss, zuzugeben. Auf diese Weise wird eine Entmischung vermieden und gleichzeitig eine gute antivirale Aktivität gewährleistet.

Im Falle der Verwendung von zwei Bioziden kann das erste Biozid in einer Menge zwischen 15 und 25 Gew%, bevorzugt 20 Gew%, und das zweite Biozid in einer Menge zwischen 0,1 und 2 Gew%, bevorzugt zwischen 0,3 und 0,8 Gew%, besonders bevorzugt 0,5 Gew% (jeweils bezogen auf die Menge der Zusammensetzung aus zwei Silanen und Biozid) verwendet werden.

In einer besonders bevorzugten Variante wird als erstes Biozid Phenylphenol und als zweites Biozid 4-Chor-3-methylphenol verwendet. Die Menge an Phenylphenol kann dabei 20 Gew % und die Menge an 4-Chor-3-methylphenol kann 0,48 Gew% betragen.

Es wäre aber auch möglich, die zwei Biozide in einem Gewichtsverhältnis zwischen 1 : 0,5 und 1 : 1,5, insbesondere von 1 : 1 einzusetzen; d.h die zwei Biozide können z.B. in gleichen Mengen verwendet werden. Das Mengenverhältnis wird über die spezifischen Eigenschaften der verwendeten Biozide gesteuert.

Das molare Verhältnis von Silan zu Wirkstoff kann in einem Bereich zwischen 10 und 40 mol%, bevorzugt 32 mol% liegen.

In einer weiteren Ausführungsform kann die vorliegende Zusammensetzung anorganische Partikel, insbesondere Nanopartikel auf der Basis von SiO₂, wie Kieselgele oder Zeolithe, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel kann die Menge an aufgenommenen Wirkstoff weiter erhöht werden.

Das Massenverhältnis zwischen Oxid aus Alkoxiden und Oxid aus zusätzlichen Nanopartikel beträgt von 1,4 : über 1,26 : 1 bis 1 : 2,3. Typische Kieselgele sind Kieselsole wie Levasil 200 B 30, CS 30 716P, CS 20 516P. Diese Kieselsole weisen eine Depotwirkung auf und können somit die Wirksamkeit verbessern.

Die vorliegende Zusammensetzung kann in einem Verfahren umfassend die folgenden Schritte hergestellt werden:
- Bereitstellen von einer Mischung enthaltend mindestens eine Verbindung der allgemeinen Formel (I), und mindestens eine Verbindung der allgemeinen Formel (II);
- Zugabe von mindestens einem Katalysator, insbesondere einer Säure, zu der Mischung aus mindestens einer Verbindung der Formel (I) und mindestens einer Verbindung der Formel (II);
- Zugabe von mindestens einem Glycolether oder einem Diol,
- Zugabe von mindestens einem antimikrobiellen Wirkstoff und ggf. Erwärmen der Mischung;
- ggfs. Abtrennen der gebildeten alkoholischen Phase (z.B. durch Verdampfen) von der wässrigen Phase des Gemisches aus mindestens einer Verbindung der Formel (I), mindestens einer Verbindung der Formel (II), und dem mindestens einem antimikrobiellen Wirkstoff.

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

In dem Fall, dass anorganische Nanopartikel, wie z.B. Kieselsol, der Zusammensetzung zugemischt werden, werden diese bevorzugt zusammen mit dem Wirkstoff zugegeben. In einer Variante kann der Wirkstoff aber auch zeitversetzt zum Kieselsol, z.B. nach dem Kieselsol zugegeben werden.

Die so hergestellte Suspension der Zusammensetzung ist stabil und kann als Additiv in ein Lacksystem, insbesondere ein Alkohol-basiertes Lacksystem, eingerührt werden und zur Erzeugung einer antimikrobiellen Oberfläche verwendet werden.

Es ist aber auch möglich, die hergestellte Suspension der Zusammensetzung zu trocknen und das so erhaltene Pulver weiter zu verwenden. Die pulverförmige Zusammensetzung wird bevorzugt in einen Schmelzklebstoff eingebracht.

Als Lacksysteme können Acrylatlacke, - PU-Lacke, -Epoxydlacke, -Silicatlacke und/oder Leinölbasierte Lacke zum Einsatz kommen. Die Menge an antiviraler Komponente liegt dabei üblicherweise in der Grössenordnung von 0,5- 3 Gew%, bevorzugt ca. 1 - 2 Gew% bezogen auf Lack.

Als Schmelzklebstoff können ein Polyurethan basierter Schmelzklebstoff, oder EVA- oder PAbasierte Schmelzklebstoffe verwendet werden.

Die antimikrobiell wirksame Zusammensetzung, Lacksysteme oder Schmelzklebstoffe können zur Beschichtung von Trägermaterialien, insbesondere von Holzwerkstoffplatten, wie Holzspanplatten, mitteldichten Faser (MDF)-, hochdichten Faser (HDF)- oder Grobspan (OSB)-, Sperrholzplatten, aber auch ggfs. von Kunststoff-Komposit-Platten (WPC) verwendet werden.
Der Auftrag des Lacksystems auf eine Holzwerkstoffplatte erfolgt typischerweise mittels Walzen, Giessköpfen oder einem Sprühsystem,

Ein geeignetes Verfahren zur Herstellung einer Holzwerkstoffplatte beschichtet mit einem die antiviralen Zusammensetzung enthaltenden Lacksystem umfasst die folgenden Schritte:
- Bereitstellen einer Holzwerkstoffplatte, die optional mit einem Dekor oder einem Furnier versehen ist,
- optionales Aufbringen von mindestens einer Lackschicht ohne antivirale Zusammensetzung, und
- Aufbringen des mindestens einem die antivirale Zusammensetzung enthaltenen Lacksystems, insbesondere UV-Lacksystems.

Ein weiteres geeignetes Verfahren zur Herstellung einer Holzwerkstoffplatte beschichtet mit einem die antiviralen Zusammensetzung enthaltendes Lacksystem umfasst die folgenden Schritte:
- Bereitstellen einer Holzwerkstoffplatte, die optional mit einem Dekor oder einem Furnier versehen ist,
- Aufbringen von mindestens einem Haftgrund, insbesondere einem UV-Haftgrund, auf mindestens eine Seite der Holzwerkstoffplatte,
- Aufbringen von mindestens einer weiteren Grundierung, insbesondere einem UV-Grund,
- Aufbringen des mindestens einem die antivirale Zusammensetzung enthaltenen Lacksystems, insbesondere UV-Lacksystems.

Gemäß einer Ausführungsform des Verfahrens ist es auch möglich, das Lacksystem auf eine Holzwerkstoffplatte aufzubringen, die mit einem harzimprägnierten Overlay-Papier und mindestens einer Furnierlage, verpresst ist. Dabei wird zunächst ein Haftgrund, insbesondere ein UV-Haftgrund, auf die Furnierlage aufgetragen, gefolgt von einer weiteren Grundierung, insbesondere UV-Grund. Auf diesen Schichtaufbau wird das Lacksystem, insbesondere das UV-Lacksystem, mit der antiviralen Zusammensetzung aufgebracht.

Nach jedem Auftrag der einzelnen Schichten wird eine Angelierung (An- bzw. Vorhärtung) unter Verwendung von UV-Strahlung vorgenommen. Nach dem letzten Auftrag des antiviralen Lacksystems erfolgt eine Durchhärtung ebenfalls unter Verwendung von UV-Strahlung.

Die mit dem vorliegenden Verfahren beschichtete Holzwerkstoffplatte, wie z.B. eine Holzspanplatte, weist somit den folgenden Schichtaufbau auf:
- mindestens eine Holzwerkstoffplatte; und
- mindestens einen auf der Holzwerkstoffpatte vorgesehenen Lackaufbau aus optionaler Lackschicht ohne antivirale Zusammensetzung und Lacksystem mit antiviraler Zusammensetzung,

In einer weiteren Ausführungsforme weist die mit dem vorliegenden Verfahren beschichtete Holzwerkstoffplatte, wie z.B. eine Holzspanplatte, den folgenden Schichtaufbau auf:
- mindestens eine Holzwerkstoffplatte; und
- mindestens einen auf der Holzwerkstoffpatte vorgesehenen Lackaufbau aus Haftgrund, Grundierung und Lacksystem mit antiviraler Zusammensetzung,

In einer bevorzugten Ausführungsform weist die beschichtete Holzwerkstoffplatte, wie z.B. eine Holzspanplatte, den folgenden Schichtaufbau auf:
- mindestens eine Holzwerkstoffplatte;
- optional mindestens eine Overlay-Papierlage;
- mindestens eine auf der Holzwerkstoffplatte vorgesehene Dekorschicht, insbesondere in Form einer Furnierlage, und
- mindestens einen auf der Holzwerkstoffpatte vorgesehenen Lackaufbau aus Haftgrund, Grundierung und Lacksystem mit antiviraler Zusammensetzung

Wird die antivirale Zusammensetzung in einen Schmelzklebstoff eingebracht, wird dieser mittels Walzen oder Rakeln auf das Trägermaterial, insbesondere Holzwerkstoffplatte, aufgebracht.

Ein geeignetes Verfahren zur Herstellung einer Holzwerkstoffplatte beschichtet mit einem die antiviralen Zusammensetzung enthaltenden Schmelzklebstoff umfasst die folgenden Schritte:
- Bereitstellen einer Holzwerkstoffplatte, die optional mit einem Dekor oder einem Furnier versehen ist, und
- Aufbringen des mindestens einen die antivirale Zusammensetzung enthaltenen Schmelzklebstoffes, insbesondere PUR-Schmelzklebstoffes.

Die Auftragstemperatur des Schmelzklebstoffes ist abhängig von der Schmelztemperatur des verwendeten Schmelzklebstoffes ab. So kann im Falle eines Polyurethan-Schmelzklebstoffes die Applikationstemperatut zwischen 130 und 170°cm bevorzugt bei 150°C, liegen.

Die Auftragsmenge des Schmelzklebstoffes liegt zwischen 20 und 50 g/m², bevorzugt 30 und 40 g/m². Es ist auch möglich, mehrere Schichten des Schmelzklebstoffes aufzutragen.
Die mit dem vorliegenden Verfahren beschichtete Holzwerkstoffplatte, wie z.B. eine Holzspanplatte, weist somit den folgenden Schichtaufbau auf:
- mindestens eine Holzwerkstoffplatte; und
- mindestens eine auf der Holzwerkstoffpatte vorgesehene Schicht aus einem Schmelzklebstoff mit antiviraler Zusammensetzung,
Es ist auch vorstellbar, dass die beschriebenen Beschichtungen abriebfeste Partikel enthalten. Diese können zusammen mit dem Lacksystem oder Schmelzklebstoff aufgebracht werden oder auf diese aufgestreut werden.

Als abriebfeste Partikel werden z.B. Partikel aus Korund (Aluminiumoxide), Borcarbide, Siliziumdioxide, Siliziumcarbide verwendet. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird.

Die Menge an aufgebrachten, insbesondere aufgestreuten abriebfesten Partikeln beträgt 10 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 35 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA-Standard). In einer Variante werden als abriebfeste Partikel Edelkorund weiß F230 verwendet.

Die Erfindung wird nachfolgend unter Bezugnahme an Ausführungsbeispielen näher erläutert.

### Ausführungsbeispiel 1: Additiv für sillikatbasierte Lacksysteme

Vorlage von 19,2 g Methyltriethoxysilan und 5,6 g Tetraethoxysilan. Starten der Hydrolyse durch Zugabe von 12,3 g deionisiertem Wasser und 0,8 g 37 % ige Schwefelsäure. Nach einer Rührzeit von ca. 5 Stunden wird ein Gemisch aus 3,2 g Wasser und 7 g Dipropylengycolmonomethylether hinzugegeben. Durch Zugabe von 2,98 g einer 10 % igen Natriumhydroxydlösung kann nun der pH-Wert auf 6 eingestellt werden. Im Anschluss erfolgt nun die Zugabe von 5,24 g Biphenyl-2-ol.

Anschließend wird mit Hilfe eines Rotationsverdampfers nun der bei der Hydrolyse und Kondensationsreaktion entstehende Ethanol entfernt.

Das fertige Additiv hat einen Flammpunkt von über 70 °C und kann nun jedem Alkohol basierten Lacksystem zugegeben werden.

Beispiel für die Herstellung einer transparenten glasartigen Beschichtung mit antiviralen Eigenschaften.

Vorlage von 100 g einer alkoholischen SiO₂ basierten Lackrezeptur (ino^{®}dur T.) Unter Rühren wird 8,5 g des oben beschriebenen Additivs hinzugegeben und weitere 30 Minuten gerührt. Die Applikation auf Glas oder Holzsubstrate erfolgt nun mittels Sprühbeschichtung, wobei eine Trockenschichtdicke von ca. 20 µm eingestellt wird. Die nachgeschaltete Verdichtung erfolgt in einem Umlufttrockenschrank bei 180 °C für 15 Minuten.

### Ausführungsbeispiel 2: Additiv für sillikatbasierte Lacksysteme

Vorlage von 16,2 g Methyltriethoxysilan, 6,7 g Glycidyloxypropyltriethoxysilan und 7,7 g Tetraethoxysilan. In dieses Silangemisch werden 9,42 g 4-Chloro-3-Methylphenol eingerührt und ca. 30 Minuten bei Raumtemperatur gerührt bis alles komplett gelöst ist. Zum Starten der Hydrolyse erfolgt nun eine Zugabe von 14,7 g deionisiertem Wasser und 1,1 g 0,5 molare Salzsäure. Nach einer Rührzeit von ca. 3 Stunden wird ein Gemisch aus 3,9 g Wasser und 8,2 g Dipropylengycolmonomethylether hinzugegeben.

Anschließend wird mit Hilfe eines Rotationsverdampfers nun der bei der Hydrolyse und Kondensationsreaktion entstehende Ethanol entfernt.

Das fertige Additiv hat einen Flammpunkt von über 70 °C und kann nun jedem Alkohol basierten Lacksystem zugegeben werden.

Beispiel für die Herstellung einer transparenten glasartigen Beschichtung mit antiviralen Eigenschaften.

Vorlage von 100 g eines organomodifizierten Silikonharzes (Phenylmethylsilikonharze) der Firma Evonik Silikophtal HTT. Unter Rühren wird 10,2 g des oben beschriebenen Additivs hinzugegeben und weitere 30 Minuten gerührt. Die Applikation auf Glas oder Holzsubstrate erfolgt nun mittels Sprühbeschichtung, wobei eine Trockenschichtdicke von ca. 40 µm eingestellt wird. Die nachgeschaltete Verdichtung erfolgt in einem Umlufttrockenschrank bei 250 °C für 30 Minuten.

### Ausführungsbeispiel 3: Antiviraler Fussboden

Eine HDF (Format: 2800 x 2070 x 8 mm) wird in einer Kurztakt-Presse beidseitig mit einem Furnier (0,5 mm, Eichenfurnier oben, Buchenfurnier unten) beschichtet. Dabei wird die Verklebung mit einem mit Melamin beharzten Overlay durchgeführt. Das Overlay hatte ein Papiergewicht von 25 g/m² und ein Endgewicht mit Melaminharz von 150 g/m² (VC-Wert: ca. 6,0 %). Die Presszeit lag bei 45 sec., die Presstemperatur bei 180°C und der Pressdruck bei 40 bar. D. Danach werden mit einem 3D-Drucker die Vertiefungen lagenweise verfüllt. Nach der Verpressung und dem Abkühlprozess wurde das Eichenfurnier mit einem Lacksystem ablackiert, das den Einsatz als Bodenbelag ermöglichte. Dabei wurde folgender Aufbau verwendet:
- 1 x 12 g/m² UV Haftgrund (Fa. Hesse, UG 7025)
- 3 x 18 g/m² UV-Grund (Fa. Hesse, UG 7401)
- 1 x 6 g/m² UV-Oxyreaktivöl auf Leinölbasis (Fa. Hesse, RO 79852) mit 2 Gew% antiviralem Wirkstoff

Nach jedem Auftrag wird eine Angelierung mit Hilfe von UV-Strahlung vorgenommen. Nach dem letzten Auftrag erfolgt eine Durchhärtung ebenfalls mit Hilfe von UV-Strahlung. Der Aufbau erreichte gemäß der DIN EN 16511 bezüglich des Verhaltens gegenüber Abriebbeanspruchung die Nutzungsklasse 32.

Aus dem Großformat wurden in einer Fussbodenstrasse einzelne Dielen mit einem rundumlaufenden Profil versehen, das eine leimlose Verlegung zuließ.

### Ausführungsbeispiel 4: Antivirale geölte Möbeloberfläche

Eine Spanplatte (Format: 2800 x 2070 x 18 mm) wird in einer Kurztakt-Presse beidseitig mit einem Furnier (0,5 mm, Kirschbaumfurnier oben und unten) beschichtet. Dabei wird die Verklebung mit einem mit Melamin beharztem Overlay durchgeführt. Das Overlay hatte ein Papiergewicht von 25 g/m² und ein Endgewicht mit Melaminharz von 150 g/m² (VC-Wert: ca. 6,0 %). Die Presszeit lag bei 45 sec., die Presstemperatur bei 180°C und der Pressdruck bei 40 bar. Nach der Verpressung und Abkühlung wurde das Kirschbaumfurnier mit einem Lacksystem ablackiert, das den Einsatz als Front ermöglichte. Dabei wurde folgender Aufbau verwendet:
- 1 x 12 g/m² UV Haftgrund (Fa. Hesse, UG 7025)
- 1 x 18 g/m² UV-Grund (Fa. Hesse, UG 7401)
- 1 x 6 g/m² UV-Oxyreaktivöl auf Leinölbasis (Fa. Hesse, RO 79852) mit 2 Gew% antiviralem Wirkstoff

Nach jedem Auftrag wird eine Angelierung mit Hilfe von UV-Strahlung vorgenommen. Nach dem letzten Auftrag erfolgt eine Durchhärtung ebenfalls mit Hilfe von UV-Strahlung.

Aus dem Großformat wurden in einer Maschinenstrasse Fixmasse für Frontelemente erzeugt.

### Ausführungsbeispiel 5: Antivirale lackierte Möbeloberfläche

Eine Spanplatte (Format: 2800 x 2070 x 18 mm) wird in einer Kurztakt-Presse beidseitig mit einem Furnier (0,5 mm, Kirschbaumfurnier oben und unten) beschichtet. Dabei wird die Verklebung mit einem mit Melamin beharztem Overlay durchgeführt. Das Overlay hatte ein Papiergewicht von 25 g/m² und ein Endgewicht mit Melaminharz von 150 g/m² (VC-Wert: ca. 6,0 %). Die Presszeit lag bei 45 sec., die Presstemperatur bei 180°C und der Pressdruck bei 40 bar. Nach der Verpressung und Abkühlung wurde das Kirschbaumfurnier mit einem Lacksystem ablackiert, das den Einsatz als Front ermöglichte. Dabei wurde folgender Aufbau verwendet:
- 1 x 12 g/m² UV Haftgrund (Fa. Hesse, UG 7025)
- 1 x 18 g/m² UV-Grund (Fa. Hesse, UG 7401)
- 1 x 6 g/m² UV-Excimerdecklack (UX 113333-22010 der Fa. Hesse) mit 2 Gew% antiviralem Wirkstoff

Nach jedem Auftrag wird eine Angelierung mit Hilfe von UV-Strahlung vorgenommen. Nach dem letzten Auftrag erfolgt eine Durchhärtung ebenfalls mit Hilfe von UV-Strahlung.

Damit wurde eine Oberfläche erzeugt, die einen Glanzgrad von 5 Glanzpunkten gemäß DIN EN ISO 2813 (2015-02: Beschichtungsstoffe - Bestimmung des Glanzgrades unter 20°, 60° und 85°), Messwinkel 85° besaß.

Aus dem Großformat wurden in einer Maschinenstrasse Fixmasse für Frontelemente erzeugt.

### Ausführungsbeispiel 6: Geölte Holzfurnieroberfläche

Eine Spanplatte (Format: 2800 x 2070 x 18 mm) wird in einer Kurztakt-Presse beidseitig mit einem Holzfurnier (0,5 mm, Kirschbaumfurnier oben und unten) beschichtet. Dabei wird die Verklebung mit einem mit Melamin beharztem Overlay durchgeführt. Das Overlay hatte ein Papiergewicht von 25 g/m² und ein Endgewicht mit Melaminharz von 150 g/m² (VC-Wert: ca. 6,0 %). Die Presszeit lag bei 45 sec., die Presstemperatur bei 180°C und der Pressdruck bei 40 bar. Nach der Verpressung und Abkühlung wurde das Kirschbaumfurnier mit einem Lacksystem ablackiert, das den Einsatz als Front ermöglichte. Dabei wurde folgender Aufbau verwendet:
- 1 x 17 g/m² UV-Oxyreaktivöl
- 1 x 6 g/m² UV-Oxyreaktivöl mit 2 Gew% antiviraler Komponente

Nach jedem Auftrag wird eine Angelierung mit Hilfe von UV-Strahlung vorgenommen. Nach dem letzten Auftrag erfolgt eine Durchhärtung ebenfalls mit Hilfe von UV-Strahlung.

Damit wurde eine Oberfläche erzeugt, die einen Glanzgrad von 5 Glanzpunkten gemäß DIN EN ISO 2813 (2015-02: Beschichtungsstoffe - Bestimmung des Glanzgrades unter 20°, 60° und 85°), Messwinkel 85° besaß.

Aus dem Großformat wurden in einer Maschinenstrasse Fixmasse für Frontelemente erzeugt.

### Ausführungsbeispiel 7: Additiv für Polyurethansystem (Hotmelt)

Zur Einarbeitung des Additivs in ein 100 % PUR Hotmelt-System, wird das Additiv in ein Polyol eingearbeitet, welches dann in einem weiteren Schritt zu dem fertigen PUR Hotmelt-System weiterverarbeitet wird.

### Herstellung des modifizierten Polyols:

Vorlage von 3,56 g Methyltriethoxysilan und 20,8 g Tetraethoxysilan. Starten der Hydrolyse durch Zugabe von 8,28 g deionisiertem Wasser und 4,2 g eines lonentauschers (Levatit 2629). Nach einer Rührzeit von ca. 4 Stunden wird der lonentauscher abgesiebt und ein Gemisch aus 2,8 g Wasser und 16,9 g Polybutadien-Diol (Krasol LBH 2000) hinzugegeben. Im Anschluss erfolgt nun die Zugabe von 5,24 g Biphenyl-2-ol und das gesamte Gemisch wird unter Rückfluss für weitere 2 Stunden bei 50 °C erwärmt. Anschließend wird mit Hilfe eines Rotationsverdampfers (50 °C, 100 mbar) der bei er Hydrolyse entstehende Alkohol entfernt

Das fertige Polyol modifizierte Additiv hat einen Flammpunkt von über 70 °C und kann nun zu weiterem Polyol (z.B. Krasol LBH 2000) zugegeben werden. Dieses Polyol kann nun zur Herstellung des PUR- Hotmelts eingesetzt.

### Ausführungsbeispiel 8: Pulverförmiges Additiv für die Zugabe in beliebige Polymersysteme (z.B. Polyurethansystem oder Polyethylenterephthalat)

Zur Einarbeitung des Additivs in verschiedene Polymere ist auch der Einsatz eines pulverförmigen Additivs hilfreich, welches dann anschließend z. B. über einen Heiß-Kneter in verschiedenste Matrizes eingearbeitet werden kann.

Herstellung des modifizierten Polyols:
Vorlage von 3,56 g Methyltriethoxysilan und 20,8 g Tetraethoxysilan. Starten der Hydrolyse durch Zugabe von 8,28 g deionisiertem Wasser und 4,2 g eines lonentauschers (Levatit 2629). Nach einer Rührzeit von ca. 4 Stunden wird der lonentauscher abgesiebt. Dem Gemisch wird nun 5,24 g Biphenyl-2-ol hinzugegeben und das gesamte Gemisch wird unter Rückfluss für weitere 2 Stunden bei 50 °C erwärmt. Anschließend wird das gesamte Additiv bis zur Trockenheit (2 Stunden) in einer Kristallisierschale bei 75 °C im Trockenschrank getrocknet. Der erhaltene Kuchen wird gebrochen und kleingemahlen und für weiter 2 Stunden bei 75 °C getrocknet. Anschließend wird das trockene Additiv mit Hilfe einer Perlmühle trocken auf die gewünschte Korngröße vermahlen.

Das so erhaltene Pulver kann nun einem Kunststoff über Rühren, Kneten oder Extrusion beigegeben werden.

### Antivirale Tests:

Die antiviralen Zusammensetzungen wurden nach ISO 217022:2019-05 " Messung von antiviraler Aktivität auf Kunststoff- und anderen nicht-porösen Oberflächen" auf ihre antivirale Aktivität untersucht.

Die Ergebnisse ergaben für die Ausführungsbeispiele 2-7 eine antivirale Aktivität in Bezug auf Bakteriophage MS2 (DSM 13767) mit einem log10 PFU von 3 und mehr. Z.B. für das Ausführungsbeispiel 7 mit einem Iog10 PFU von über 4.

## Patentansprüche

1. Zusammensetzung mit antimikrobiellen Eigenschaften, insbesondere antiviralen Eigenschaften, als Additiv für Oberflächenbeschichtungen von Trägermaterialien, wobei die Zusammensetzung umfasst:
- mindestens ein Polyol oder einen Glycolether;
- mindestens eine Verbindung der allgemeinen Formel (I)
**R¹ₐSiX₍₄₋ₐ₎** **(I),**
wobei
- X Alkoxy ist, und
- R¹ ein organischer Rest ist ausgewählt aus der Gruppe umfassend Alkyl Cycloalkyl oder Phenyl, und
- a = 1, 2, 3, insbesondere 1 oder 2 ist,
- mindestens eine Verbindung der allgemeinen Formel (II)
**SiX₄** **(II),**
wobei X Alkoxy ist, und
- mindestens einem antimikrobiellen Wirkstoff, insbesondere mindestens ein Biozid.

2. Zusammensetzung nach einem der vorhergehenden Ansprüche, **gekennzeichnet durch**
- mindestens eine Verbindung der allgemeinen Formel (III)
**R²SiX₃** **(III),**
wobei
- X Alkoxy ist, und
- R¹ ein organischer Rest ist ausgewählt aus der Gruppe umfassend C1-C10 Alkyl, die durch -O- oder-NH- unterbrochen sein können, und
- wobei R¹ mindestens eine funktionelle Gruppe Q₁ aufweist, die ausgewählt ist aus einer Gruppe enthaltend eine Methacryl-, Methacryloxy-, Vinyl-, und Epoxid- Gruppe.

3. Zusammensetzung nach einem der vorhergehenden Ansprüche, **dadurch gekennzeichnet, dass** X ausgewählt ist aus einer Gruppe enthaltend C₁₋₆-Alkoxy, insbesondere Methoxy, Ethoxy, n-Propoxy, i-Propoxy und Butoxy.

4. Zusammensetzung nach einem der vorhergehenden Ansprüche, **dadurch gekennzeichnet, dass** R¹ der Verbindung der allgemeinen Formel (I) ausgewählt ist aus einer Gruppe umfassend C1-C10 Alkyl, bevorzugt C1-C8 Alkyl, insbesondere bevorzugt Methyl, Ethyl, Propyl, Pentyl, Hexyl, Heptyl, Octyl.

5. Zusammensetzung nach einem der vorhergehenden Ansprüche, **dadurch gekennzeichnet, dass** R² der Verbindung der allgemeinen Formel (III) ausgewählt ist aus einer Gruppe umfassend Methyl, Ethyl, Propyl, Pentyl, Hexyl, Heptyl, Octyl, die durch -O- oder-NH- unterbrochen sein können.

6. Zusammensetzung nach einem der vorhergehenden Ansprüche, **dadurch gekennzeichnet, dass** die mindestens eine funktionelle Gruppe Q¹ der Verbindung der allgemeinen Formel (III) ausgewählt ist aus einer Gruppe enthaltend Epoxid-, Amino- und Vinyl-Gruppe.

7. Zusammensetzung nach einem der vorhergehenden Ansprüche, **dadurch gekennzeichnet, dass** als Glycolether Dipropylenglycolmonomethylether, Tripropylenglycolmonomethylether, 1-Methoxy-2-propanol, Tripropylenglykol-monobutylether, Propylenglykol-butylether, Ethylenglykol-monophenylether verwendet wird.

8. Zusammensetzung nach einem der vorhergehenden Ansprüche, **dadurch gekennzeichnet, dass** als Polyol Polybutadiendiol, Polyethylenglycol, Polypropylenglycol, Propan-1,2,3-triol verwendet wird.

9. Zusammensetzung nach einem der vorhergehenden Ansprüche, **dadurch gekennzeichnet, dass** das mindestens eine Biozid ausgewählt ist aus einer Gruppe umfassend Desinfektionsmittel und Schutzmittel, insbesondere umfassend Benzalkoniumchlorid, Chitosan, Phenylphenol, Kupfersulfat.

10. Zusammensetzung nach einem der vorhergehenden Ansprüche, **gekennzeichnet durch** anorganische Partikel, insbesondere Nanopartikel, bevorzugt auf der Basis von SiO₂ (Kieselsol, Zeolithe).

11. Lack zur Beschichtung von Trägermaterialien umfassend eine Zusammensetzung nach einem der Ansprüche 1 - 10.

12. Schmelzklebstoff zur Beschichtung von Trägermaterialien umfassend eine Zusammensetzung nach einem der Ansprüche 1 - 10,

13. Verwendung einer Zusammensetzung nach einem der Ansprüche 1- 10, eines Lackes nach Anspruch 11 oder eines Schmelzklebstoffes zur Beschichtung von Trägermaterialien, insbesondere von Holzwerkstoffplatten, wie mitteldichten Faser (MDF)-, hochdichten Faser (HDF)- oder Grobspan (OSB)-Platten, Sperrholzplatten oder eine Kunststoff-Komposit-Platten (WPC).

14. Holzwerkstoffplatte beschichtet mit mindestens einer Zusammensetzung nach einem der Ansprüche 1 bis 10, einem Lack nach Anspruch 11 oder einem Schmelzklebstoff nach Anspruch 12.

## Geänderte Patentansprüche

### Geänderte Patentansprüche gemäss Regel 137(2) EPÜ.

1. Zusammensetzung mit antimikrobiellen Eigenschaften, insbesondere antiviralen Eigenschaften, als Additiv für Oberflächenbeschichtungen von Holzwerkstoffplatten, wobei die Zusammensetzung umfasst:
- mindestens ein Polyol oder einen Glycolether;
- mindestens eine Verbindung der allgemeinen Formel (I)
**R¹ₐSiX₍₄₋ₐ₎** **(I),**
wobei
- X Alkoxy ist, und
- R¹ ein organischer Rest ist ausgewählt aus der Gruppe umfassend Alkyl Cycloalkyl, und
- a = 1, 2, 3, insbesondere 1 oder 2 ist,
- mindestens eine Verbindung der allgemeinen Formel (II)
**SiX₄** **(II),**
wobei X Alkoxy ist, und
- mindestens ein Biozid, wobei das Biozid kein Zink enthält.

2. Zusammensetzung nach einem der vorhergehenden Ansprüche, **gekennzeichnet durch**
- mindestens eine Verbindung der allgemeinen Formel (III)
**R²SiX₃** **(III),**
wobei
- X Alkoxy ist, und
- R¹ ein organischer Rest ist ausgewählt aus der Gruppe umfassend C1-C10 Alkyl, die durch -O- oder -NH- unterbrochen sein können, und
- wobei R¹ mindestens eine funktionelle Gruppe Q₁ aufweist, die ausgewählt ist aus einer Gruppe enthaltend eine Methacryl-, Methacryloxy-, Vinyl-, und Epoxid- Gruppe.

3. Zusammensetzung nach einem der vorhergehenden Ansprüche, **dadurch gekennzeichnet, dass** X ausgewählt ist aus einer Gruppe enthaltend C₁₋₆-Alkoxy, insbesondere Methoxy, Ethoxy, n-Propoxy, i-Propoxy und Butoxy.

4. Zusammensetzung nach einem der vorhergehenden Ansprüche, **dadurch gekennzeichnet, dass** R¹ der Verbindung der allgemeinen Formel (I) ausgewählt ist aus einer Gruppe umfassend C1-C10 Alkyl, bevorzugt C1-C8 Alkyl, insbesondere bevorzugt Methyl, Ethyl, Propyl, Pentyl, Hexyl, Heptyl, Octyl.

5. Zusammensetzung nach einem der vorhergehenden Ansprüche, **dadurch gekennzeichnet, dass** R² der Verbindung der allgemeinen Formel (III) ausgewählt ist aus einer Gruppe umfassend Methyl, Ethyl, Propyl, Pentyl, Hexyl, Heptyl, Octyl, die durch -O- oder -NH- unterbrochen sein können.

6. Zusammensetzung nach einem der vorhergehenden Ansprüche, **dadurch gekennzeichnet, dass** die mindestens eine funktionelle Gruppe Q¹ der Verbindung der allgemeinen Formel (III) ausgewählt ist aus einer Gruppe enthaltend Epoxid-, Amino- und Vinyl-Gruppe.

7. Zusammensetzung nach einem der vorhergehenden Ansprüche, **dadurch gekennzeichnet, dass** als Glycolether Dipropylenglycolmonomethylether, Tripropylenglycolmonomethylether, 1-Methoxy-2-propanol, Tripropylenglykolmonobutylether, Propylenglykol-butylether, Ethylenglykol-monophenylether verwendet wird.

8. Zusammensetzung nach einem der vorhergehenden Ansprüche, **dadurch gekennzeichnet, dass** als Polyol Polybutadiendiol, Polyethylenglycol, Polypropylenglycol, Propan-1,2,3-triol verwendet wird.

9. Zusammensetzung nach einem der vorhergehenden Ansprüche, **dadurch gekennzeichnet, dass** das mindestens eine Biozid ausgewählt ist aus einer Gruppe umfassend Desinfektionsmittel und Schutzmittel, insbesondere umfassend Benzalkoniumchlorid, Chitosan, Phenylphenol, Kupfersulfat.

10. Zusammensetzung nach einem der vorhergehenden Ansprüche, **gekennzeichnet durch** anorganische Partikel, insbesondere Nanopartikel, bevorzugt auf der Basis von SiO₂ (Kieselsol, Zeolithe).

11. Lack zur Beschichtung von Holzwerkstoffplatten umfassend eine Zusammensetzung nach einem der Ansprüche 1 - 10.

12. Schmelzklebstoff zur Beschichtung von Holzwerkstoffplatten umfassend eine Zusammensetzung nach einem der Ansprüche 1 - 10.

13. Verwendung einer Zusammensetzung nach einem der Ansprüche 1- 10, eines Lackes nach Anspruch 11 oder eines Schmelzklebstoffes zur Beschichtung von Holzwerkstoffplatten, wie mitteldichten Faser (MDF)-, hochdichten Faser (HDF)- oder Grobspan (OSB)-Platten, Sperrholzplatten oder eine Kunststoff-Komposit-Platten (WPC).

14. Holzwerkstoffplatte beschichtet mit mindestens einer Zusammensetzung nach einem der Ansprüche 1 bis 10, einem Lack nach Anspruch 11 oder einem Schmelzklebstoff nach Anspruch 12.
